# EUROPEAN PATENT APPLICATION

(11) **EP 1 900 703 A1**
(43) Date of publication of application: **19.03.2008**
(21) Application number: 07017255.6
(22) Date of filing: 04.09.2007
(51) Int. Cl.: C04B 28/00, C04B 28/04, C09K 8/46

(54) **Low density cements for use in cementing operations**

(30) Priority: 14.09.2006 US 521069
(71) Applicant: BJ SERVICES COMPANY, Houston TX 77041 (US)
(72) Inventor: Hogg, Luverne, Peachland, BC J0H1XB (CA); Fraser, Michael, Calgary, Alberta T1Y2J4 (CA)
(74) Representative: Stenger, Watzke & Ring

(57) **Abstract**

A cement mix suitable for blocking or plugging an abandoned pipeline or back filling a mine shaft, tunnel or excavations contains Portland cement or a cement blend of two components selected from Portland cement, fly ash, pozzolan, slag, silica fume and gypsum; diatomaceous earth; zeolite and an inorganic salt accelerator. The cement mix may further contain an alkali metasilicate and/or alkali silicate. A cementitious slurry, formulated from the cement mix, may have a density less than or equal to 1500 kg/m³, and exhibits good compressive strength.

## Description

### Field of the Invention

This invention relates to cement mixes and low density cementitious slurries prepared therefrom which are useful in the blocking, plugging or back filling of conduits such as pipelines, mine shafts, tunnels and excavations, including hydrocarbon recovery conduits as well as conduits used in the recovery of minerals, copper, potash, coal, copper, potassium chloride, etc.

### Background of the Invention

Various techniques have been developed for blocking, plugging and filling of conduits used in the recovery of materials such as hydrocarbons, potash, coal, copper, potassium chloride, minerals, etc. Such techniques become necessary when mine shafts, tunnels or excavations, as well as pipelines used in the transportation of produced fluids, are abandoned, flooded, clogged or otherwise no longer useful.

In one such technique, the conduit is sealed or backfilled by the use of a foamed cement grout. Often, however, the grout, once mixed, becomes overly viscous, and tends to compress and cause friction and back-pressure when pumped through the conduit. Such difficulties are often even more pronounced as it becomes necessary to move the grout over great distances, as from the surface to an injection point far inside a tunnel. Another problem encountered with conventional grouting systems during the filling of conduits stems from the inability of the grout to be delivered continuously at a high volume rate over sustained periods.

Alternative cement based compositions have therefore been sought. Cementitious compositions which exhibit low density have in particular been sought since they would be more economical than cement compositions of the prior art. To be useful as alternative cement compositions however, it is essential that such lightweight low density cements exhibit enhanced compressive, tensile and bond strengths upon setting.

### Summary of the Invention

The cement mix of the invention, when formulated into a hydraulically-active, cementitious slurry, is suitable for use in such cementing operations as the blocking, plugging or back filling of conduits, including conduits used in hydrocarbon recovery (such as abandoned pipelines) as well as conduits used in the recovery of such materials as copper, potassium chloride, potash, coal, minerals, etc. Such cementitious slurries exhibit the requisite compressive, tensile and bond strengths for such purposes.

The cement mix comprises Portland cement or a cement blend; diatomaceous earth; zeolite and an inorganic salt accelerator. The cement mix further preferably contains an alkali metasilicate and/or alkali silicate.

Suitable cement blends include those containing two components selected from the group consisting of Portland cement, fly ash, pozzolan, slag, silica fume and gypsum.

The inorganic salt accelerator is preferably selected from the group consisting of alkali sulfates, alkali aluminates, alkali carbonates and alkali chlorides. Suitable inorganic salt accelerators include sodium sulfate, potassium sulfate, lithium sulfate, sodium carbonate, sodium sulfate and sodium aluminate. In a preferred embodiment, the inorganic salt accelerator is sodium sulfate.

A cementitious slurry, formulated from the cement mix, may have a density less than or equal to 1500 kg/m³, preferably less than or equal to 1300 kg/m³.

The slurry may contain fresh water, salt water, formation brine or synthetic brine or a mixture thereof.

### Detailed Description of the Preferred Embodiments

The cement mix of the invention, when formulated into a hydraulically-active, cementitious slurry, is suitable for blocking, plugging or back filling conduits. Such conduits include pipelines, mine shafts, tunnels and excavations and are exemplified by hydrocarbon recovery conduits as well as conduits used in the recovery of potash, coal, copper, potassium chloride, minerals, etc.

The cement mix comprises Portland cement or a cement blend, diatomaceous earth and an inorganic salt accelerator. Further, the cement mix preferably contains an alkali metasilicate and/or alkali silicate.

The cement blend may contain two components selected from the group consisting of Portland cement, fly ash, pozzolan, slag, silica fume and gypsum. Typically, between from about 20 to about 70, preferably between from about 35 to about 65, weight percent of the cement mix is Portland cement or the cement blend.

Any of the oil well type cements of the class "A-H" as listed in the API Spec 10A, (22nd ed., January 1995 or alternatively ISO 10426-1), are suitable. Especially preferred is Portland cement, preferably an API Class A, C, G or H cement. Alternatively, the Portland cement may be a Type I, II, III or V ASTM construction cement. Type II is especially desirable where moderate heat of hydration is required. Type III or high early cement is typically preferred when early compressive strength is needed. Type V is preferred when high sulfate resistance is required.

In a preferred embodiment, the cement is a high early cement since such cements typically set faster than conventional Portland cement. Such high early cements typically contain Portland cement in combination with calcium aluminate and calcium sulfate. Such high early cements include those disclosed in US Patent No. 3,997,353.

When used, the slag has hydraulic properties and, preferably, is ground-granulated blast furnace slag with a minimum glass count of about 95% and a fine particle size of about 1 to about 100 µm, preferably less than about 45 µm, most preferably less than 10 µm or a fineness of about 310 to about 540 m² /kg. When blended with Portland cement, the cement blend may contain between from about 90 weight percent cement and 10 weight percent slag to 10 weight percent cement and 90 weight percent slag with all percentages based on dry weight.

The cement of the cement mix is that which is sufficient to impart to a cementitious slurry (of density less than or equal to 1500 kg/m³) good compressive strength.

The cement mix contains between from about 4 to about 20 weight percent of zeolite. Preferably, the amount of zeolite in the cement mix is between from about 10 to about 15 weight percent.

Typically, between from about 20 to about 60 , preferably from about 25 to about 45, weight percent of the cement mix is diatomaceous earth.

The alkali metasilicate and/or alkali silicate typically serves as an accelerator. In addition, it assists in the lowering of the density of the cementitious slurry and thereby permits a greater amount of water to be used in the slurry.

The alkali metasilicate and/or alkali silicate is preferably sodium metasilicate or sodium silicate. When present the cement mix typically contains between from about 0.5 to about 5.0 weight percent of alkali metasilicate and/or alkali silicate. A preferred sodium metasilicate for use in this invention is commercially available from BJ Services Company as A-2, SMS or EXC.

The inorganic salt accelerator is preferably selected from the group consisting of alkali sulfates, alkali aluminates, alkali carbonates and alkali chlorides. Suitable inorganic salt accelerators include sodium sulfate, potassium sulfate, lithium sulfate, sodium carbonate, sodium sulfate and sodium aluminate. Typically between from about 0.1 to about 20 weight percent of the cement mix is the inorganic salt accelerator.

In a preferred embodiment, the inorganic salt accelerator consists of sodium aluminate, sodium carbonate and sodium sulfate wherein between from about 0 to about 1.0 weight percent of the cement mix is sodium aluminate, between from about 0 to about 2.0 weight percent of the cement mix is sodium carbonate and between from about 0 to about 10 weight percent of the cement mix is sodium sulfate.

In another preferred embodiment, the inorganic salt accelerator consists of sodium carbonate and sodium sulfate wherein between from about 0 to about 2 weight percent of the cement mix is sodium carbonate and between from about 0 to about 10 weight percent of the cement mix is sodium sulfate.

In yet another preferred embodiment, the inorganic salt accelerator is sodium sulfate wherein between from about 0 to about 15, more preferably between from about 0.5 to about 10, weight percent of the cement mix is sodium sulfate.

A cementitious slurry, formulated from the cement mix, may exhibit a density less than or equal to 1500 kg/m³, preferably less than or equal to 1300 kg/m³. The slurry may contain fresh water, salt water, formation brine or synthetic brine or a mixture thereof.

The cementitious slurry may be used to block or plug an abandoned pipeline or back filling mine shafts and excavations by being pumped into the abandoned pipeline, mine shafts or excavation and allowing it to set. The slurry may further be used to cement a subterranean formation for an oil or gas well by pumping the cementitious slurry into the subterranean formation and then allowing the cementitious slurry to set.

The cementitious slurry may further contain, for fluid loss control, one or more fluid loss additives. Suitable fluid loss control additives include polyvinyl alcohol, hydroxyethyl cellulose, carboxymethyl hydroxyethyl cellulose, synthetic anionic polymers and synthetic cationic polymers. Such fluid loss control additives are typically dry blended to the cement mix. The amount of fluid loss control additive in the cementitious slurry, when employed, is between from about 0.3 to about 1.0 weight percent.

The cementitious slurry may further contain a set retarder in order to provide adequate placement time in deeper and hotter wells. The set retarder, when employed, should be chosen in order to minimize the effect on the compressive strength of the slurry upon setting.

Suitable set retarders include glucoheptonates, such as sodium glucoheptonate, calcium glucoheptonate and magnesium glucoheptonate; lignin sulfonates, such as sodium lignosulfonate and calcium sodium lignosulfonate; gluconic acids gluconates, such as sodium gluconate, calcium gluconate and calcium sodium gluconate; phosphonates, such as the sodium salt of EDTA phosphonic acid; sugars, such as sucrose; hydroxycarboxylic acids, such as citric acid; and the like, as well as their blends.

When employed, the cementitious slurry contains between from about 0.1 to about 2 weight percent of retarder.

The cementitious slurry may further contain a lightweight density modifying agent. Suitable lightweight density modifying agents which serve to decrease density of the cementitious slurry are hollow ceramic spheres, hollow glass spheres, plastic spheres, perlite and gilsonite. The amount of lightweight density modifying agent present in the cementitious slurry is an amount sufficient to lower the density to the desired range. When present, the amount of lightweight density modifying agent in the cementitious slurry is typically between from about 3 to about 35 weight percent.

The cementitious slurry may further contain a foaming agent and a gas such as nitrogen gas or air.

The following example illustrates the practice of the present invention in its preferred embodiments. Other embodiments within the scope of the claims herein will be apparent to one skilled in the art from consideration of the specification and practice of the invention as disclosed herein. It is intended that the specification, together with the example, be considered exemplary only, with the scope and spirit of the invention being indicated by the claims which follow.

### EXAMPLE

A cement mix was prepared by blending 530 kg of high early cement, 190 kg of White Cliffs diatomaceous earth available from White Cliffs Mining in Arizona, 190 kg of zeolite, 20 kg of sodium metasilicate, 10 kg of soda ash and 55 kg of sodium sulfate. A sufficient amount of fresh water was then added to the cement mix to reach a density of 1300 kg/m². The resulting slurry was stirred for about 20 minutes to ensure homogeneity and dissolve any remaining lumps of dry material.

The rheology was determined at 300, 200, 100 and 6 rpm on a rotational viscometer with an R-1 and B-1 rotor and bob combination (API RP10B-2/ISO 10426-2):
300 (rpm): 45;
200: 39;
100: 33
6: 22
Compressive strength measurements at 30°C were measured as follows:
amount of time required to achieve a compressive strength of 0.35 MPa (500 psi): 6:26;
24 hours: 1.54;
48 hours: 2.34

From the foregoing, it will be observed that numerous variations and modifications may be effected without departing from the true spirit and scope of the novel concepts of the invention.

## Claims

1. A cement mix comprising:
(a) Portland cement or a cement blend comprising at least two components selected from the group consisting of Portland cement, fly ash, pozzolan, slag, silica fume and gypsum;
(b) diatomaceous earth;
(c) between from 4 to 20, preferably from 10 to 15, weight percent zeolite; and
(d) an inorganic salt accelerator.

2. The cement mix of Claim 1, further comprising an alkali metasilicate and/or alkali silicate.

3. The cement mix of Claim 1 or 2, wherein the Portland cement is selected from the group consisting of API Class A, C, G and H cements and Type I, II, III or V ASTM construction cements including high early cement.

4. The cement mix of Claim 2 or 3, wherein the alkali metasilicate and/or alkali silicate is selected from the group consisting of sodium metasilicate and sodium silicate.

5. The cement mix of any of Claims 1 to 4, wherein the inorganic salt accelerator is selected from the group consisting of alkali sulfates (including sodium sulfate, potassium sulfate and lithium sulfate), alkali aluminates (including sodium aluminate), alkali carbonates (including sodium carbonate) and alkali chlorides.

6. The cement mix of any of Claims 1 to 5, which comprises:
(a) between from about 20 to about 70 weight percent of Portland cement or cement blend;
(b) between from about 20 to about 60 weight percent of diatomaceous earth;
(c) between from about 4 to about 20 weight percent of zeolite;
(d) between from 0 to about 5.0 weight percent of alkali metasilicate and/or alkali silicate; and
(e) between from about 0.1 to about 20 weight percent of inorganic salt accelerator.

7. The cement mix of any of Claims 1 to 6, wherein the inorganic salt accelerator is selected from the group consisting of sodium aluminate, sodium carbonate and sodium sulfate, wherein either:
(a) between from 0 to 1.0 weight percent of the cement mix is sodium aluminate, between from 0 to 2.0 weight percent of the cement mix is sodium carbonate and between from 0.5 to 10 weight percent of the cement mix is sodium sulfate;
(b) between from 0.5 to 2.0 weight percent of the cement mix is sodium carbonate and between from 0.5 to 10 weight percent of the cement mix is sodium sulfate; and
(c) between from 0.5 to 20 weight of the cement mix is sodium sulfate.

8. A cementitious slurry comprising water and the cement mix of any of Claims 1 to 7.

9. The cementitious slurry of Claim 8, wherein the density of the cementitious slurry is less than or equal to 1500 kg/m³.

10. A method of using a cement mix to either:
(a) block, plug or back fill a pipeline, mine shaft, tunnel or excavation; or
(b) cement within a subterranean formation for an oil or gas well by pumping into the pipeline, mine shaft, tunnel or excavation or oil or gas well the cementitious slurry of Claim 8 or 9 and allowing the cementitious slurry to set.
